# EUROPEAN PATENT SPECIFICATION

(11) **EP 4 604 195 B1**
(45) Date of publication and mention of the grant of the patent: **11.11.2026**
(21) Application number: 24738581.8
(22) Date of filing: 05.01.2024
(51) Int. Cl.: H01M 4/13, H01M 4/36, H01M 4/66, H01M 4/80, H01M 50/531, H01G 11/26, H01G 11/28, H01G 11/66, H01G 11/70, H01G 11/74, H01G 11/86, H01M 10/052

(54) **ELECTRODE SHEET AND BATTERY**
ELEKTRODENFOLIE UND BATTERIE
FEUILLE D'ÉLECTRODE ET BATTERIE

(30) Priority: 05.01.2023 CN 202320018275 U
(43) Date of publication of application: 20.08.2025
(73) Proprietor: Zhuhai CosMX Battery Co., Ltd., Zhuhai, Guangdong 519180 (CN)
(72) Inventor: YANG, Sainan, Zhuhai, Guangdong 519180 (CN); XU, Tengfei, Zhuhai, Guangdong 519180 (CN); YANG, Zhangying, Zhuhai, Guangdong 519180 (CN); XIE, Jichun, Zhuhai, Guangdong 519180 (CN)
(74) Representative: Murgitroyd & Company
(86) International application number: PCT/CN2024/070957
(87) International publication number: WO 2024/146650

(56) References cited:
- EP-A1- 3 624 235
- EP-A1- 3 648 204
- EP-A1- 3 910 718
- EP-A1- 4 075 540
- EP-A1- 4 086 982
- WO-A1-2022/022324
- WO-A1-2022/199628
- WO-A1-2022/237691
- CN-A- 113 839 084
- CN-A- 113 871 571
- CN-U- 213 520 041
- CN-U- 215 220 764
- CN-U- 218 215 360
- CN-U- 218 215 360
- CN-U- 218 957 773
- US-A1- 2020 035 986
- US-B2- 7 706 129

## Description

### TECHNICAL FIELD

The present application relates to the technical field of batteries, and in particular, to an electrode plate, a battery and a preparation method of an electrode plate.

### BACKGROUND

Lithium-ion batteries are widely applied to consumer electronic products due to their advantages such as high energy density, high output power and the like. In the conventional technology, a single-sided welding tab is used to improve an energy density of a battery, that is, only a part of an active material layer on one side of a current collector is removed, so that the current collector is exposed to connect the tab, and the active material layer on the other side is retained.

However, the current density at the tab is relatively large, which result in a relatively high consumption of electrolyte, so that the tab is prone to insufficient electrolyte during the charging and discharging process and generate a lithium precipitation phenomenon, thereby affecting cycle performance and safety performance of the battery.

Patent application document No. CN218215360U provides an electrode plate, a cell, and a battery. The electrode plate includes: a current collector extending in a longitudinal direction and having a first end and a second end, the current collector having a first surface and an opposite second surface; a first active material layer is disposed on the first surface; a second active material layer is disposed on the second surface; the first surface has a first uncoated foil region starting from the first end, and a tab fixed to the first uncoated foil region; and the second active material layer at least partially covers an area on the second surface corresponding to the first uncoated foil region. By having the second active material layer at least partially cover the area on the second surface corresponding to the first uncoated foil region, increased support strength is provided to the electrode plate during winding, thereby reducing the probability of wrinkle formation and improving the production yield.

Patent application document No. EP3624235A1 provides a multilayer electrode. The multilayer electrode includes a current collector, a first electrode mixture layer disposed on at least one surface of the current collector, and a second electrode mixture layer disposed on the first electrode mixture layer. The first and second electrode mixture layers include one or more types of conductive materials. A porosity of the conductive material contained in the second electrode mixture layer is greater than that of the conductive material contained in the first electrode mixture layer. Ion mobility to the inside of an electrode may be improved while maintaining electrical conductivity, by including a conductive material having a relatively great average particle diameter and pores in the conductive material itself. Output characteristics of a lithium secondary battery and charging and discharging performance may be improved.

### SUMMARY

The electrode plate according to the invention is defined by the features of claim 1, the battery according to the invention is defined by the features of claim 12 and the preparation method of an electrode plate according to the invention is defined by the features of claim 13. The present application provides an electrode plate, which make a porosity of a first active layer is greater than a porosity of a second active layer by disposing the first active layer on an opposite side of an uncoated foil region. Applying the electrode plate to a battery can ensure the first active layer absorbs more electrolyte, further improving cycle performance and safety performance of the battery.

The present application provides a battery, including the foregoing electrode plate. The battery has excellent cycle performance and safety performance.

A first aspect of the present application provides an electrode plate, including a current collector, a first active layer, a second active layer and a tab, where the current collector includes a first surface and a second surface which are disposed oppositely; the first surface is provided with an uncoated foil region, the second surface is provided with the first active layer, and a vertical projection, on the first surface, of the first active layer at least partially coincides with the uncoated foil region, and the uncoated foil region is provided with the tab. The first surface is further provided with a first another active material layer region located outside the uncoated foil region, and the first another active material layer region is coated with the second active layer. The second surface is further provided with a second another active material layer region located outside the first active layer, and the second another active material layer region is coated with the second active layer. A porosity of the first active layer is greater than a porosity of the second active layer.

In an embodiment of the present application, the vertical projection, on the first surface, of the first active layer completely coincides with the uncoated foil region.

In an embodiment of the present application, the porosity of the first active layer is A, the porosity of the second active layer is B, and B: A = 1: (1.1-10).

In an embodiment of the present application, a thickness of the first active layer is greater than a thickness of the second active layer.

In an embodiment of the present application, a compacted density of the first active layer is less than a compacted density of the second active layer.

In an embodiment of the present application, on the first surface, the first another active material layer region is located on at least two opposite sides of the uncoated foil region.

In an embodiment of the present application, on the second surface, the second another active material layer region is located on at least two opposite sides of the first active layer.

In an embodiment of the present application, a thickness of the electrode plate is H, a thickness of the first active layer is H1, and H: H1 = 1: (0.5-0.95).

In an embodiment of the present application, the tab extends in a first direction, and the tab includes a connection portion located in the uncoated foil region and an extension portion located outside the current collector, where the first direction is a width direction of the current collector.

In an embodiment of the present application, a size of the uncoated foil region in the first direction is L, a size of the connection portion in the first direction is L1, and L = (1-2) L1.

In an embodiment of the present application, a size of the first active layer in a second direction is W, a size of the connection portion in the second direction is W1, W = (1-5) W1, and the second direction is perpendicular to the first direction. The second direction is a length direction of the current collector.

A second aspect of the present disclosure provides a battery, including the above electrode plate.

A third aspect of the present disclosure provides a preparation method of an electrode plate, including: preparing an active layer slurry; coating the active layer slurry on a first surface and a second surface of an aluminum foil and drying to form an active layer; performing rolling and cleaning on the active layer, to make a part of the first surface expose to obtain an uncoated foil region, and a porosity of a first active layer symmetrical to the uncoated foil region be greater than a porosity of a second active layer of a first another active material layer region and a second another active material layer region; welding a tab in the uncoated foil region; where the first surface is provided with the uncoated foil region, the second surface is provided with the first active layer; the first surface is further provided with the first another active material layer region located outside the uncoated foil region, and the first another active material layer region is coated with the second active layer; the second surface is further provided with the second another active material layer region located outside the first active layer, and the second another active material layer region is coated with the second active layer.

In an embodiment of the present application, the performing rolling and cleaning on the active layer, to make the part of the first surface expose to obtain the uncoated foil region, and the porosity of the first active layer symmetrical to the uncoated foil region be greater than the porosity of the second active layer of the first another active material layer region and the second another active material layer region includes: cleaning the active layer on the first surface to expose the part of the first surface, to obtain the uncoated foil region; performing rolling on the active layer, where during a rolling process, a compacted density of the first active layer symmetrical to the uncoated foil region is less than a compacted density of the second active layer of the first another active material layer region and the second another active material layer region, to make the porosity of the first active layer be greater than the porosity of the second active layer.

In an embodiment of the present application, the performing rolling and cleaning on the active layer, to make the part of the first surface expose to obtain the uncoated foil region, and the porosity of the first active layer symmetrical to the uncoated foil region be greater than the porosity of the second active layer of the first another active material layer region and the second another active material layer region includes: performing rolling on the active layer, where after rolling, a thickness of the active layer is consistent; performing cleaning on the active layer on the first surface to expose the part of the first surface, to obtain the uncoated foil region; after cleaning, performing pore-forming on the first active layer symmetrical to the uncoated foil region by laser, to make the porosity of the first active layer be greater than the porosity of the second active layer.

Embodiments of the present application have at least the following beneficial effects.

According to the electrode plate provided in the present application, an uncoated foil region is provided with a tab, the tab and a first active layer are disposed oppositely, and a first another active material layer region and a second another active material layer region located outside the uncoated foil region and the first active layer are provided with a second active layer. By making a porosity of the first active layer greater than a porosity of the second active layer, when the electrode plate is applied to a battery, compared with the second active layer, the first active layer can absorb more electrolyte. Additionally, since the tab and the first active layer are disposed oppositely, it can be ensured that there is sufficient electrolyte at the tab as conductive medium to transmit current, thereby improving cycle performance and safety performance of the battery.

The battery provided in the present application includes the foregoing electrode plate, and the battery has excellent cycle performance and safety performance.

### BRIEF DESCRIPTION OF THE DRAWINGS

In order to more clearly illustrate technical solutions of the present application, the following briefly describes the accompanying drawings required in the description of the embodiments of the present application. Obviously, the accompanying drawings in the following description are some embodiments of the present application, and for those of ordinary skill in the art, other drawings may be obtained according to these drawings without creative efforts.
FIG. 1 is a structural schematic diagram of a cross-section of an electrode plate according to an embodiment of the present application.
FIG. 2 is a structural schematic diagram of a cross-section of an electrode plate according to another embodiment of the present application.
FIG. 3 is a schematic diagram of a top view of an electrode plate according to an embodiment of the present application.
FIG. 4 is a schematic diagram of a top view of an electrode plate according to another embodiment of the present application.
FIG. 5 is a cycle performance diagram of a battery in Embodiment 1 and Comparative Example 1 in the present application.
FIG. 6 is a curve graph of thickness changing of the battery in Example 1 and Comparative Example 1 during a cycle process according to the present application.

Description of reference numerals:
1-current collector; 11-a first surface; 12-a second surface; 101-an uncoated foil region; 102-a first active region; 1021-a first active layer; 103-a first another active material layer region; 104-a second another active material layer region; 1031-a second active layer; 1003-a first another active region; 1004-a second another active region; 1005-a third another active region; 1006-a fourth another active region; 2-tab.

### DETAILED DESCRIPTION OF THE EMBODIMENTS

In order to make objectives, technical solutions, and advantages of embodiments of the present application clearer, the following clearly describes the technical solutions in the embodiments of the present application with reference to the accompanying drawings in the embodiments of the present application. Apparently, the described embodiments are a part rather than all of the embodiments of the present application. All other embodiments obtained by a person of ordinary skill in the art based on the embodiments of the present application without creative efforts shall fall within the protection scope of the present application.

In the description of the present application, "disposed" and "connection" may be a fixed connection, a detachable connection, an integral connection or a mechanical connection, an electrical connection, etc. For a person of ordinary skill in the art, the specific meanings of the above-mentioned terms in the present application may be understood according to specific circumstances. Terms such as "first" and "second" are only used for descriptive purposes, for example, distinguishing various components, so as to more clearly illustrate/explain the technical solutions.

It should be noted that, in the drawings, X direction is a length direction of a current collector (a second direction), Y direction is a width direction of the current collector (a first direction), and Z direction is a thickness direction of the current collector.

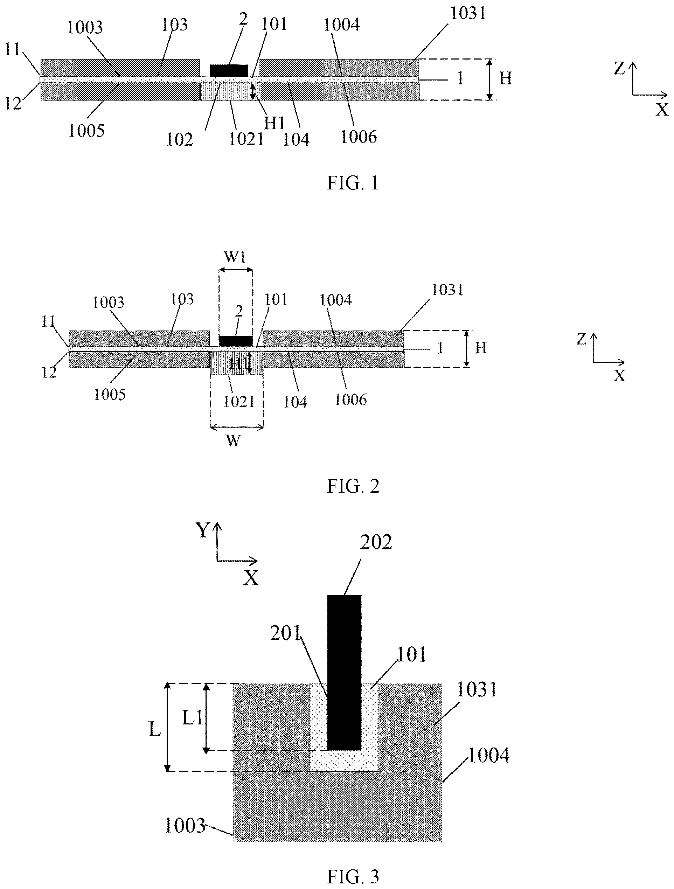

Referring to FIG. 1 to FIG. 4, the present application provides an electrode plate, including a current collector 1, a first active layer 1021, a second active layer 1031 and a tab 2. The current collector 1 includes a first surface 11 and a second surface 12 which are disposed oppositely. The first surface 11 is provided with an uncoated foil region 101, the second surface 12 is provided with a first active layer 1021; and a vertical projection, on the first surface 11, of the first active layer 1021 at least partially coincides with the uncoated foil region 101. The uncoated foil region 101 is provided with the tab 2. The first surface 11 is further provided with a first another active material layer region 103 located outside the uncoated foil region 101, and the first another active material layer region 103 is coated with a second active layer 1031. The second surface 12 is further provided with a second active material layer region 104 located outside the first active layer 1021, and the second another active material layer region 104 is coated with the second active layer 1031. A porosity of the first active layer 1021 is greater than a porosity of the second active layer 1031.

In the present application, the electrode plate includes a current collector 1, a first active layer 1021 and a second active layer 1031. The current collector 1 is divided into an active layer region and an uncoated foil region 101 according to whether the active layer is disposed. The active layer is disposed in the active layer region, and a region in which the active layer is not disposed is the uncoated foil region 101. The active layer region is divided into a first active region 102, a first another active material layer region 103 and a second another active material layer region 104. The first active layer 1021 is disposed in the first active region 102, and the second active layer 1031 is disposed in the first another active material layer region 103 and the second another active material layer region 104.

The current collector 1 includes surfaces disposed oppositely. The surfaces refer to the largest and opposite surfaces of the current collector, which are a first surface 11 and a second surface 12 respectively.

A partial region on the first surface 11 is not provided with the active layer, so as to expose a part of the first surface 11 to form the uncoated foil region 101, and the exposed first surface 11 is used to connect with a tab 2. The tab 2 electrically connects the electrode plate to an external circuit.

The first active region 102 is located on the second surface 12 disposed opposite to the first surface 11, and a vertical projection, on the first surface 11, of the first active region 102 at least partially coincides with the uncoated foil region 101. Since the first active region 102 is provided with the first active layer 1021, the uncoated foil region 101 is disposed on one side, and a side opposite to the uncoated foil region 101 is provided with the first active layer 1021, that is, a vertical projection, on the first surface 11, of the first active layer 1021 at least partially coincides with the uncoated foil region 101. Compared with a double-sided arrangement of the uncoated foil region, the single-sided arrangement of the uncoated foil region can reduce the total amount of removed active layer, and improve energy density of the battery.

The vertical projection, on the first surface 11, of the first active region 102 at least partially coincides with the uncoated foil region 101. The vertical projection, on the first surface 11, of the first active region 102 partially or completely coincides with the uncoated foil region 101.

Further, a vertical projection, on the first surface 11, of the first active layer 1021 partially or completely coincides with the uncoated foil region 101.

When the vertical projection, on the first surface 11, of the first active region 102 partially coincides with the uncoated foil region 101, it may be divided into three cases. The first case is that the vertical projection, on the first surface 11, of the first active region 102 is located in the uncoated foil region 101. The second case is that the uncoated foil region 101 is located in the vertical projection, on the first surface 11, of the first active region 102. The third case is that a part of the uncoated foil region 101 coincides with a part of the vertical projection, on the first surface 11, of the first active region 102.

When the vertical projection, on the first surface 11, of the first active region 102 completely coincides with the uncoated foil region 101, the first active region 102 and the uncoated foil region 101 are disposed symmetrically, that is, the first active layer 1021 and the uncoated foil region 101 are disposed symmetrically.

In the present application, a region, outside the uncoated foil region 101, of the first surface 11 and a region, outside the first active region 102, of the second surface 12 are collectively referred to as another active material layer region. The second active layer 1031 is coated on the another active material layer region. Specifically, the first surface 11 is further provided with a first another active material layer region 103 located outside the uncoated foil region 101, and the first another active material layer region 103 is coated with the second active layer 1031. The second surface 12 is further provided with a second another active material layer region 104 located outside the first active layer 1021, and the second another active material layer region 104 is coated with the second active layer 1031.

The first active layer 1021 and the second active layer 1031 are porous structures composed of particles, and a selection of materials of the first active layer 1021 and the second active layer 1031 is not specifically limited in the present application, as long as a porosity of the first active layer 1021 is greater than a porosity of the second active layer 1031.

The electrolyte is used to fill the pores of the active layer and serves as a conductive medium to transfer current, and a filling amount of the electrolyte is related to the pores of the active layer. In the present application, the electrode plate is applied to the battery, since the porosity of the first active layer 1021 is greater than the porosity of the second active layer 1031, compared with the second active layer 1031, the first active layer 1021 can absorb more electrolyte, result in a relatively high filling amount of the electrolyte, which is beneficial to the transmission of lithium ions and current. In addition, since the first active layer 1021 and the tab 2 are disposed oppositely, in a charging and discharging process, it can be ensured that there is sufficient conductive medium at the tab 2 to transmit current, thereby improving cycle performance and safety performance of the battery.

When the first active layer 1021 and the uncoated foil region 101 are symmetrically disposed, the vertical projection, on the first surface 11, of the first active layer 1021 can completely cover the tab 2, and there is enough electrolyte at the tab 2 to transmit lithium ions to facilitate the transmission of current.

In the present application, the material of the first active layer 1021 and the material of the second active layer 1031 may be the same or different, as long as it is ensured that the porosity of the first active layer 1021 is greater than the porosity of the second active layer 1031.

In a system where a material of the active layer is fixed, that is, when the material of the first active layer 1021 and the material of the second active layer 1031 are the same, a porosity of the first active layer 1021 may be greater than a porosity of the second active layer 1031 in a manner of reducing compacted density. For example, the active material is coated on the first surface 11 and the second surface 12, a part of the active material on the first surface 11 is cleaned to obtain the uncoated foil region 101; then a compacted density of a region symmetrical to the uncoated foil region 101 is controlled to be less than a compacted density of other regions by rolling to obtain the first active layer 1021 and the second active layer 1031. As shown in FIG. 2, a thickness of the first active layer 1021 is greater than a thickness of the second active layer 1031, and the porosity of the first active layer 1021 is greater than the porosity of the second active layer 1031. Where compacted density = surface density/a thickness of the rolled active layer = surface density/(a thickness of a rolled electrode plate - a thickness of the current collector).

In a system where a size of the electrode plate is fixed, a porosity of the first active layer 1021 may be greater than a porosity of the second active layer 1031 by artificially forming pores. For example, the active material is coated on the first surface 11 and the second surface 12, and then the active layer is obtained by rolling. A part of the active layer of the first surface 11 is cleaned to obtain the uncoated foil region 101. Micropores or through-holes are provided on a surface of the active layer in a region symmetrical to the uncoated foil region 101, thereby increasing a porosity of the region. As shown in FIG. 1, a thickness of the first active layer 1021 is equal to a thickness of the second active layer 1031, and the porosity of the first active layer 1021 is greater than the porosity of the second active layer 1031.

A method of coating is not limited in the present application, for example, continuous coating, and during the coating process, surface density of each region may be monitored online, so as to ensure uniform coating.

As the porosity of the first active layer 1021 increases, the amount of the absorbed electrolyte also gradually increases, which is beneficial to improve the transmission of lithium ions between electrode plates, and reduce the energy density of the electrode plates. Therefore, in order to balance cycle performance and energy density of the lithium-ion battery, when a porosity of the first active layer 1021 is A and a porosity of the second active layer 1031 is B, B: A = 1: (1.1-10), for example, 1: 1.1, 1: 2, 1: 3, 1: 4, 1: 6, 1: 8, 1: 10, or a range composed of any two thereof.

The position of the uncoated foil region 101 is not limited in the present application, and is determined according to an actual situation. The uncoated foil region 101 may be disposed at an end portion, in a length direction of the current collector, of the first surface 11, and may also be disposed in the middle of the first surface 11.

When the uncoated foil region 101 is located at the end portion, in the length direction of the current collector 1, of the first surface 11, the uncoated foil region 101 may be disposed only at one end, in the length direction, of the current collector 1, or may be respectively disposed at two ends, in the length direction, of the current collector 1.

When the uncoated foil region 101 is located at the middle of the first surface 11, in the length direction of the current collector, the first surface 11 sequentially includes a first another active region 1003, the uncoated foil region 101, and a second another active region 1004. The middle position refers to a position that is not at the end portion of the current collector. The first another active region 1003 and the second another active region 1004 are collectively referred to as the first another active material layer region 103.

The first surface 11 has two edges which are parallel to the length direction of the current collector 1 and disposed oppositely, and a vertical distance between the two edges is a size of the current collector 1 in a width direction. The uncoated foil region 101 is communication with at least one edge to form an opening.

On the first surface 11, the first another active material layer region 103 is located on at least two opposite sides of the uncoated foil region 101. In an embodiment, as shown in FIG. 3, when the uncoated foil region 101 is in communication with only one edge, the first another active material layer region 103 is located on three sides of the uncoated foil region 101, the first another active region 1003 is connected to the second another active region 1004, and the outer side of the side, away from the opening, of the uncoated foil region 101 is a position where the first another active region 1003 is connected to the second another active region 1004. The first another active region 1003 and the second another active region 1004 are respectively provided with a second active layer 1031.

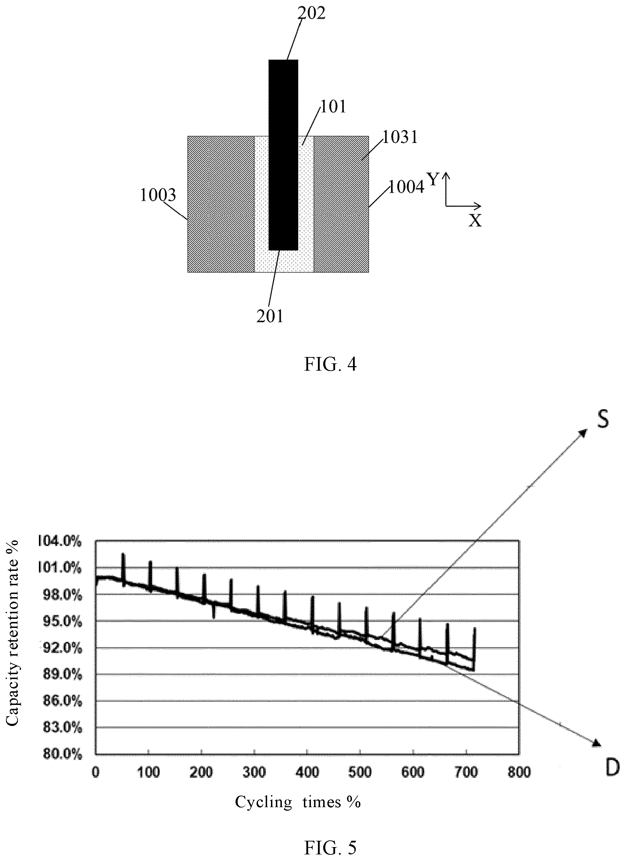

In another embodiment, as shown in FIG. 4, when the uncoated foil region 101 is communicated with the two edges, the uncoated foil region 101 penetrates through the current collector 1 along a width direction of the current collector 1. The first another active material layer region 103 is located on two opposite sides of the uncoated foil region, and the first another active region 1003 is spaced apart from the second another active region 1004.

On the second surface 12, when the uncoated foil region 101 and the first active region 102 are symmetrically disposed, the second another active material layer region 104 includes a third another active region 1005 and a fourth another active region 1006 which are symmetrically disposed with respect to the first another active region 1003 and the second another active region 1004. The third another active region 1005 and the fourth another active region 1006 are respectively provided with the second active layer 1031.

In the above embodiment, the thickness H of the electrode plate is equal to the sum of the thickness of the current collector 1 and the thicknesses of the second active layers 1031 on the two surfaces.

On the basis that the porosity of the first active layer 1021 is greater than the porosity of the second active layer 1031, the pores of the first active layer 1021 can be further increased by increasing the thickness H1 of the first active layer 1021, so as to improve the absorption amount of the electrolyte. However, as the thickness H1 of the first active layer 1021 increases, the rate performance and cycle performance of the battery may be significantly reduced. This is because as the thickness H1 of the first active layer 1021 increases, a number of complex pores increases and the tortuosity is high, which significantly increases resistance to a diffusion of lithium ions therein. Therefore, the present application defines the thickness H of the electrode plate and the thickness H1 of the first active layer 1021, where H: H1 = 1: (0.5-0.95), for example, 1: 0.5, 1: 0.6, 1: 0.7, 1: 0.8, 1: 0.9, 1: 0.95, or a range composed of any two thereof.

In the present application, a vertical projection, on the first surface 11, of the tab 2 is located in a vertical projection, on the first surface 11, of the first active region 102. The tab 2 is connected to the uncoated foil region 101 and protrudes from the current collector 1. In the present application, the tab 2 is divided into a connection portion 201 and an extension portion 202 in a first direction Y, where a portion, located in the uncoated foil region 101, of the tab 2 is the connection portion 201, and a portion, extending from an edge of the current collector 1, of the tab 2 is the extension portion 202. The first direction Y refers to a width direction of the current collector.

A connection between the tab 2 and the first surface 11 can be realized through a connection between the connection portion 201 and the uncoated foil region 101. The connection portion 201 and the first surface 11 exposed by the uncoated foil region 101 are stacked. A connection manner between the connection portion 201 and the uncoated foil region 101 is not limited in the present application, for example, ultrasonic welding, laser welding, and the like.

An electrical connection between the electrode plate and an external circuit can be realized through a connection between the extension portion 202 and the external circuit.

In order to achieve a vertical projection, on the first surface 11, of the tab 2 is located in a vertical projection, on the first surface 11, of the first active region 102, a size of the connection portion 201 is smaller than a size of the first active region 102 along a length direction of the current collector 1 (the second direction). Further, the size of the connection portion 201 is smaller than the size of the first active layer 1021. In an embodiment, along the length direction of the current collector 1 (the second direction), the size of the first active layer 1021 is W, and the size of the connection portion 201 is W1, W = (1-5) W1.

When an active layer is disposed on at least two opposite sides of the uncoated foil region 101, in order to prevent the tab 2 from contacting the active layer, the size of the uncoated foil region 101 is greater than the size of the connection portion 201 in the width direction of the current collector 1 (the first direction). When the size of the uncoated foil region 101 is L, the size of the connection portion 201 is L1, L = (1-2) L1.

In the present application, the electrode plate is a negative electrode plate or a positive electrode plate, which is specifically determined according to the specific selection of the material of the current collector 1 and each active layer. For example, when the current collector 1 is an aluminum foil, and the material of the active layer is a positive electrode active material such as ternary material or lithium iron phosphate, the electrode plate is a positive electrode plate. When the current collector 1 is a copper foil, and the material of the active layer is a negative electrode active material such as graphite or silicon, the electrode plate is a negative electrode plate.

A battery provided in the present application includes the foregoing electrode plate. The battery includes at least two electrode plates which are stacked with each other and have opposite polarities. A separator is disposed between each two adjacent electrode plates, which is used to prevent electrode plates with opposite polarities from contacting each other and causing a short circuit of the battery. The at least one electrode plate is the above electrode plate.

The at least two electrode plates include a positive electrode plate and a negative electrode plate. At least one positive electrode plate or negative electrode plate is the above electrode plate.

Specifically, the positive electrode plate, the negative electrode plate and the separator form a battery cell in the battery. The battery may be formed by installing the battery cell and a protection circuit together inside a battery case.

The battery of the present application may be prepared by conventional methods in the field. Specifically, the battery described above may be obtained by steps such as baking, liquid injection, formation, and packaging of a battery cell obtained by lamination or winding.

According to the electrode plate and the battery provided in the present application, the electrode plate is provided with a tab 2 on an uncoated foil region 101, and a first active region 102 is provided with a first active layer 1021. The tab 2 and the first active layer 1021 are disposed oppositely, and a first another active material layer region 103 and a second another active material layer region 104 located outside the uncoated foil region 101 and the first active region 102 are provided with a second active layer 1031. By making a porosity of the first active layer 1021 greater than a porosity of the second active layer 1031, when the electrode plate is applied to the battery, compared with the second active layer 1031, the first active layer 1021 can absorb more electrolyte. Additionally, since the tab 2 and the first active layer 1021 are disposed oppositely, it can be ensured that there is sufficient conductive medium to transmit current, thereby improving cycle performance and safety performance of the battery.

The following further describes the present application by specific embodiments.

### Embodiment 1

A preparation of a positive electrode plate, a negative electrode plate and a lithium-ion battery in this embodiment includes the following steps.

### 1. Preparation of the positive electrode plate

1) Uniformly mixing 97.6% lithium cobaltate, 1.35% conductive agent and 1.05% binder to obtain a positive electrode active layer slurry.
2) Coating the positive electrode active layer slurry prepared in step 1 on a first surface 11 and a second surface 12 of an aluminum foil (with a thickness of 10 µm) and drying to form an active layer; then cleaning the active layer located at a middle position of the first surface 11 to expose a part of the first surface 11, to obtain an uncoated foil region 101. A size W of the uncoated foil region 101 in a length direction of the current collector 1 is 12 mm, and a size L of the uncoated foil region 101 in a width direction of the current collector 1 is 22 mm.
3) Performing rolling by using a roller press. During rolling process, a compacted density of the first active layer of a first active region 102 symmetrical to the uncoated foil region 101 is 3.3 g/cm³, and a compacted density of a second active layer of a first another active material layer region 103 and a second another active material layer region 104 is 4.15 g/cm³, so that after rolling, a thickness H1 of a first active layer 1021 of the first active region 102 is 60 µm, a thickness of the second active layer 1031 is 44 µm, and a thickness H of the electrode plate is 98 µm. According to measurement, a porosity of the second active layer 1031 is 16.8%, and a porosity of the first active layer 1021 is 22.1%.
4) Slitting by using a slitting machine, then welding the tab 2 in the uncoated foil region 101, where the tab 2 extends in a width direction of the current collector to obtain the positive electrode plate. The tab 2 includes a connection portion 201 located in the uncoated foil region and an extension portion 202 extending out of the current collector, and a size L1 of the connection portion 201 in the width direction of the current collector 1 is 18 mm, a size W1 of the tab 2 in the length direction of the current collector 1 is 6 mm. The positive electrode plate is obtained, as shown in FIG. 2 and FIG. 3.

### 2. Preparation of lithium-ion battery

1) Uniformly mixing 97% graphite, 0.5% conductive agent, 1.2% binder and 1.3% dispersing agent to obtain a negative electrode active layer slurry.
2) Coating the negative electrode active layer slurry prepared in step 1 on two surfaces of copper foil (with a thickness of 6 µm) and drying to obtain a negative electrode plate; then performing rolling to the negative electrode plate by using a roller press, and slitting the negative electrode plate by using a slitting machine, and finally welding a negative tab on the negative electrode plate.
3) Placing a separator between the positive electrode plate and the negative electrode plate and winding them to obtain a jelly roll.
4) Stamping aluminum-plastic film by using a stamping die, then packaging the roll core by the stamped aluminum-plastic film to obtain a battery cell, and baking until the moisture is qualified, and then injecting electrolyte.
5) Performing charging and discharging on the battery cell by using a lithium-ion battery formation device to harden the battery cell, and sorting capacity of the battery cell.
6) Performing secondary sealing on the battery cell, and folding edge to obtain the lithium-ion battery in this embodiment.

### Embodiment 2

A preparation of a negative electrode plate and a lithium-ion battery in this embodiment are consistent with those in Embodiment 1, except that a preparation of a positive electrode plate, which specifically includes the following steps.
1) Uniformly mixing 97.6% lithium cobaltate, 1.35% conductive agent and 1.05% binder to obtain a positive electrode active layer slurry.
2) Coating the positive electrode active layer slurry prepared in step 1 on a first surface 11 and a second surface 12 of an aluminum foil (with a thickness of 10 µm) and drying to form an active layer; then performing rolling on the active layer, and after rolling, a thickness H of an electrode plate is 98 µm, a thickness of the active layer is consistent, that is, a thickness H1 of the first active layer 1021 and a thickness of the second active layer 1031 are both 44 µm, and then cleaning on a middle position of the active layer on one surface of the electrode plate to obtain the uncoated foil region 101.
3) After cleaning, performing artificial pore-forming on the first active layer of the first active region 102 symmetrical to the uncoated foil region 101 by laser, that is, micropores are formed on a surface of the first active layer of the first active region 102. After pore-forming, a porosity of the first active layer 1021 is 23.4%, and a porosity of the second active layer 1031 is 16.8%.
4) Slitting by using a slitting machine, then welding the tab 2 in the uncoated foil region 101, where the tab 2 extends in the width direction of the current collector to obtain the positive electrode plate, and the tab 2 includes a connection portion 201 located in the uncoated foil region and an extension portion 202 extending out of the current collector. A size L1 of the connection portion 201 in a width direction of the current collector 1 is 18 mm, a size W1 of the tab 2 in a length direction of the current collector 1 is 6 mm. The positive electrode plate is obtained, as shown in FIG. 1 and FIG. 3.

In the preparation of a lithium-ion battery, a positive electrode plate is replaced with the positive electrode plate prepared in this embodiment.

### Embodiment 3

A preparation of a positive electrode plate and a negative electrode plate is basically consistent with those in Embodiment 2, except that a porosity of the first active layer 1021 is controlled to be 18.48% in the preparation process of the positive electrode plate, and other conditions are not changed to obtain the positive electrode plate of this embodiment.

In a preparation of a lithium-ion battery, a positive electrode plate is replaced with the positive electrode plate prepared in this embodiment.

### Embodiment 4

A preparation of a positive electrode plate and a negative electrode plate is basically consistent with those in Embodiment 2, except that a porosity of the first active layer 1021 is controlled to be 33.6% in the preparation process of the positive electrode plate, and other conditions are not changed to obtain the positive electrode plate of this embodiment;

In a preparation of a lithium-ion battery, a positive electrode plate is replaced with the positive electrode plate prepared in this embodiment.

### Embodiment 5

A preparation of a positive electrode plate and a negative electrode plate is basically consistent with those in Embodiment 2, except that a porosity of the first active layer 1021 is controlled to be 50.4% in the preparation process of the positive electrode plate, and other conditions are not changed to obtain the positive electrode plate of this embodiment.

In a preparation of a lithium-ion battery, a positive electrode plate is replaced with the positive electrode plate prepared in this embodiment.

### Comparative example 1

A preparation of a negative electrode plate and a lithium-ion battery in this embodiment are consistent with those in Embodiment 1, except that a preparation of a positive electrode plate, which specifically includes the following steps.
1) Uniformly mixing 97.6% lithium cobaltate, 1.35% conductive agent and 1.05% binder to obtain a positive electrode active layer slurry.
2) Coating the positive electrode active layer slurry prepared in step 1 on a first surface 11 and a second surface 12 of an aluminum foil (with a thickness of 10 µm) and drying to form an active layer; then performing rolling on the active layer, and after rolling, a thickness of an electrode plate is 98 µm, a thickness of the active layer is 44 µm, then cleaning on a middle position of the active layer on one surface of the electrode plate to obtain an uncoated foil region.
3) Slitting by using a slitting machine, and welding a tab in the uncoated foil region, where the tab extends in the width direction of the current collector to obtain the positive electrode plate.

In the preparation of a lithium-ion battery, a positive electrode plate is replaced with the positive electrode plate prepared by this comparative example.

### Test Example

Testing the cycle performance of batteries of the above embodiments, and the specific test results are shown in Table 1 and FIG. 5, where S represents Embodiment 1, and D represents Comparative example 1.

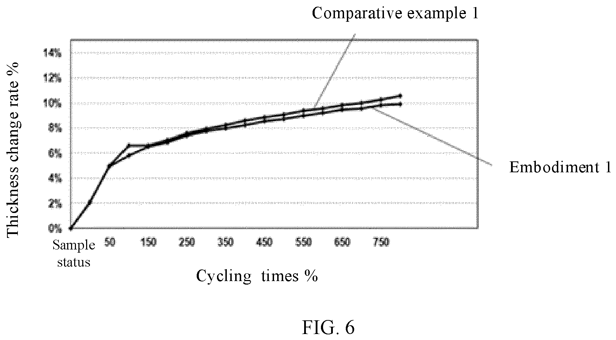

The test method is as follows: performing cycle testing on a battery at 25°C using 2.6C/1C charging condition, and measuring a thickness change curve of the battery during the cycle process, as shown in Table 1 and FIG. 6.

**Table 1**

| Category | Embodiment 1 | Embodiment 2 | Embodiment 3 | Embodiment 4 | Embodiment 5 |
|---|---|---|---|---|---|
| Capacity retention rate % after cycling 750 times | 90.61% | 90.25% | 90.45% | 90.21% | 90.39% |
| Thickness expansion change rate % after cycling 750 times | 9.93% | 9.87% | 9.62% | 9.77% | 9.82% |

It can be seen from FIG. 5 and FIG. 6 that, relative to the battery of Comparative example 1, batteries of Example 1 have a capacity retention rate of about 90.61% and a thickness expansion change rate of 9.93% after cycling 700-750 times. A battery in Comparative Example 1 has a capacity retention rate of 89.32% and a thickness expansion change rate of 10.65%. It can be seen that the batteries provided in the present application have excellent cycle performance and safety performance.

It should be noted that the numerical value and numerical range involved in the embodiments of the present application are approximate values, and may have a certain range of errors due to the influence of the manufacturing process, and this part of error may be considered negligible by a person skilled in the art.

Finally, it should be noted that the above embodiments are only used to illustrate the technical solutions of the present application, rather than to limit them.

## Claims

1. An electrode plate, comprising a current collector (1), a first active layer (1021), a second active layer (1031) and a tab (2), wherein the current collector (1) comprises a first surface (11) and a second surface (12) which are disposed oppositely;
the first surface (11) is provided with an uncoated foil region (101), the second surface (12) is provided with the first active layer (1021), and a vertical projection, on the first surface (11), of the first active layer (1021) at least partially coincides with the uncoated foil region (101); and
the uncoated foil region (101) is provided with the tab (2);
**characterized in that**:
the first surface (11) is further provided with a first another active material layer region (103) located outside the uncoated foil region (101), and the first another active material layer region (103) is coated with the second active layer (1031);
the second surface (12) is further provided with a second another active material layer region (104) located outside the first active layer (1021), and the second another active material layer region (104) is coated with the second active layer (1031); and
a porosity of the first active layer is greater than a porosity of the second active layer.

2. The electrode plate according to claim 1, wherein the vertical projection, on the first surface (11), of the first active layer (1021) completely coincides with the uncoated foil region (101).

3. The electrode plate according to claim 1 or 2, wherein the porosity of the first active layer (1021) is A, the porosity of the second active layer (1031) is B, and B: A = 1: (1.1-10).

4. The electrode plate according to any one of claims 1 to 3, wherein a thickness of the first active layer (1021) is greater than a thickness of the second active layer (1031).

5. The electrode plate according to any one of claims 1 to 4, wherein a compacted density of the first active layer (1021) is less than a compacted density of the second active layer (1031).

6. The electrode plate according to any one of claims 1 to 5, wherein on the first surface (11), the first another active material layer region (103) is located on at least two opposite sides of the uncoated foil region (101).

7. The electrode plate according to any one of claims 1 to 6, wherein on the second surface (12), the second another active material layer region (104) is located on at least two opposite sides of the first active layer (1021).

8. The electrode plate according to claim 6 or 7, wherein a thickness of the electrode plate is H, a thickness of the first active layer (1021) is H1, and H: H1 = 1: (0.5-0.95).

9. The electrode plate according to any one of claims 1 to 8, wherein the tab (2) extends in a first direction (Y), and comprises a connection portion (201) located in the uncoated foil region (101) and an extension portion (202) located outside the current collector (1), and the first direction (Y) is a width direction of the current collector (1).

10. The electrode plate according to claim 9, wherein a size of the uncoated foil region (101) in the first direction (Y) is L, a size of the connection portion (201) in the first direction (Y) is L1, and L = (1-2) L1.

11. The electrode plate according to claim 10, wherein a size of the first active layer (1021) in a second direction (X) is W, a size of the connection portion (201) in the second direction (X) is W1, W = (1-5) W1, and the second direction (X) is perpendicular to the first direction (Y), and the second direction (X) is a length direction of the current collector (1).

12. A battery, comprising the electrode plate according to any one of claims 1 to 11.

13. A preparation method of an electrode plate, comprising:
preparing an active layer slurry;
coating the active layer slurry on a first surface (11) and a second surface (12) of an aluminum foil and drying to form an active layer;
performing rolling and cleaning on the active layer, to make a part of the first surface (11) expose to obtain an uncoated foil region (101); and
welding a tab (2) in the uncoated foil region (101);
wherein the first surface (11) is provided with the uncoated foil region (101), and the second surface (12) is provided with a first active layer (1021);
**characterized in that**:
the first surface (11) is further provided with a first another active material layer region (103) located outside the uncoated foil region (101), and the first another active material layer region (103) is coated with a second active layer (1031); the second surface (12) is further provided with a second another active material layer region (104) located outside the first active layer (1021), and the second another active material layer region (104) is coated with the second active layer (1031); and
the rolling and cleaning are performed to make a porosity of the first active layer (1021) symmetrical to the uncoated foil region (101) be greater than a porosity of the second active layer (1031) of the first another active material layer region (103) and the second another active material layer region (104).

14. The preparation method according to claim 13, wherein the performing rolling and cleaning on the active layer, to make the part of the first surface (11) expose to obtain the uncoated foil region (101), and the porosity of the first active layer (1021) symmetrical to the uncoated foil region (101) be greater than the porosity of the second active layer (1031) of the first another active material layer region (103) and the second another active material layer region (104) comprises:
cleaning the active layer on the first surface (11) to expose the part of the first surface (11), to obtain the uncoated foil region (101);
performing rolling on the active layer, wherein during a rolling process, a compacted density of the first active layer (1021) symmetrical to the uncoated foil region (101) is less than a compacted density of the second active layer (1031) of the first another active material layer region (103) and the second another active material layer region (104), to make the porosity of the first active layer (1021) be greater than the porosity of the second active layer (1031).

15. The preparation method according to claim 13, wherein the performing rolling and cleaning on the active layer, to make the part of the first surface (11) expose to obtain the uncoated foil region (101), and the porosity of the first active layer (1021) symmetrical to the uncoated foil region (101) be greater than the porosity of the second active layer (1031) of the first another active material layer region (103) and the second another active material layer region (104) comprises:
performing rolling on the active layer, wherein after rolling, a thickness of the active layer is consistent;
performing cleaning on the active layer on the first surface (11) to expose the part of the first surface (11), to obtain the uncoated foil region (101);
after cleaning, performing pore-forming on the first active layer (1021) symmetrical to the uncoated foil region (101) by laser, to make the porosity of the first active layer (1021) be greater than the porosity of the second active layer (1031).

## Patentansprüche

1. Eine Elektrodenplatte, die einen Stromabnehmer (1), eine erste Aktivschicht (1021), eine zweite Aktivschicht (1031) und eine Lasche (2) beinhaltet, wobei der Stromabnehmer (1) eine erste Oberfläche (11) und eine zweite Oberfläche (12) beinhaltet, die einander gegenüberliegend angeordnet sind;
die erste Oberfläche (11) mit einem unbeschichteten Folienbereich (101) versehen ist, die zweite Oberfläche (12) mit der ersten Aktivschicht (1021) versehen ist und eine sich auf der ersten Oberfläche (11) befindliche senkrechte Projektion der ersten Aktivschicht (1021) zumindest teilweise mit dem unbeschichteten Folienbereich (101) zusammenfällt; und
der unbeschichtete Folienbereich (101) mit der Lasche (2) versehen ist;
**dadurch gekennzeichnet, dass**:
die erste Oberfläche (11) ferner mit einem ersten weiteren Aktivmaterialschichtbereich (103) versehen ist, der sich außerhalb des unbeschichteten Folienbereichs (101) befindet, und der erste weitere Aktivmaterialschichtbereich (103) mit der zweiten Aktivschicht (1031) beschichtet ist;
die zweite Oberfläche (12) ferner mit einem zweiten weiteren Aktivmaterialschichtbereich (104) versehen ist, der sich außerhalb der ersten Aktivschicht (1021) befindet, und der zweite weitere Aktivmaterialschichtbereich (104) mit der zweiten Aktivschicht (1031) beschichtet ist; und
eine Porosität der ersten Aktivschicht größer als eine Porosität der zweiten Aktivschicht ist.

2. Elektrodenplatte gemäß Anspruch 1, wobei die sich auf der ersten Oberfläche (11) befindliche senkrechte Projektion der ersten Aktivschicht (1021) vollständig mit dem unbeschichteten Folienbereich (101) zusammenfällt.

3. Elektrodenplatte gemäß Anspruch 1 oder 2, wobei die Porosität der ersten Aktivschicht (1021) A ist, die Porosität der zweiten Aktivschicht (1031) B ist und B: A = 1: (1,1-10).

4. Elektrodenplatte gemäß einem der Ansprüche 1 bis 3, wobei eine Dicke der ersten Aktivschicht (1021) größer ist als eine Dicke der zweiten Aktivschicht (1031).

5. Elektrodenplatte gemäß einem der Ansprüche 1 bis 4, wobei eine verdichtete Dichte der ersten Aktivschicht (1021) geringer ist als eine verdichtete Dichte der zweiten Aktivschicht (1031).

6. Elektrodenplatte gemäß einem der Ansprüche 1 bis 5, wobei sich auf der ersten Oberfläche (11) der erste weitere Aktivmaterialschichtbereich (103) auf mindestens zwei einander gegenüberliegenden Seiten des unbeschichteten Folienbereichs (101) befindet.

7. Elektrodenplatte gemäß einem der Ansprüche 1 bis 6, wobei sich auf der zweiten Oberfläche (12) der zweite weitere Aktivmaterialschichtbereich (104) auf mindestens zwei einander gegenüberliegenden Seiten der ersten Aktivschicht (1021) befindet.

8. Elektrodenplatte gemäß Anspruch 6 oder 7, wobei eine Dicke der Elektrodenplatte H ist, eine Dicke der ersten Aktivschicht (1021) H1 ist und H: H1 = 1: (0,5-0,95).

9. Elektrodenplatte gemäß einem der Ansprüche 1 bis 8, wobei sich die Lasche (2) in einer ersten Richtung (Y) erstreckt und einen Verbindungsabschnitt (201), der sich in dem unbeschichteten Folienbereich (101) befindet, und einen Verlängerungsabschnitt (202), der sich außerhalb des Stromabnehmers (1) befindet, beinhaltet, und die erste Richtung (Y) eine Breitenrichtung des Stromabnehmers (1) ist.

10. Elektrodenplatte gemäß Anspruch 9, wobei eine Größe des unbeschichteten Folienbereichs (101) in der ersten Richtung (Y) L ist, eine Größe des Verbindungsabschnitts (201) in der ersten Richtung (Y) L1 ist und L = (1-2) L1.

11. Elektrodenplatte gemäß Anspruch 10, wobei eine Größe der ersten Aktivschicht (1021) in einer zweiten Richtung (X) W ist, eine Größe des Verbindungsabschnitts (201) in der zweiten Richtung (X) W1 ist, W = (1-5) W1 ist und die zweite Richtung (X) senkrecht zu der ersten Richtung (Y) ist und die zweite Richtung (X) eine Längenrichtung des Stromabnehmers (1) ist.

12. Eine Batterie, die die Elektrodenplatte gemäß einem der Ansprüche 1 bis 11 beinhaltet.

13. Ein Herstellungsverfahren für eine Elektrodenplatte, das Folgendes beinhaltet:
Herstellen einer Aktivschichtaufschlämmung;
Auftragen der Aktivschichtaufschlämmung auf eine erste Oberfläche (11) und eine zweite Oberfläche (12) einer Aluminiumfolie und Trocknen, um eine Aktivschicht zu bilden;
Durchführen von Walzen und Reinigen an der Aktivschicht, um einen Teil der ersten Oberfläche (11) freizulegen, um einen unbeschichteten Folienbereich (101) zu erhalten; und
Schweißen einer Lasche (2) in dem unbeschichteten Folienbereich (101);
wobei die erste Oberfläche (11) mit dem unbeschichteten Folienbereich (101) versehen ist und die zweite Oberfläche (12) mit einer ersten Aktivschicht (1021) versehen ist;
**dadurch gekennzeichnet, dass**:
die erste Oberfläche (11) ferner mit einem ersten weiteren Aktivmaterialschichtbereich (103) versehen ist, der sich außerhalb des unbeschichteten Folienbereichs (101) befindet, und der erste weitere Aktivmaterialschichtbereich (103) mit einer zweiten Aktivschicht (1031) beschichtet ist; die zweite Oberfläche (12) ferner mit einem zweiten weiteren Aktivmaterialschichtbereich (104) versehen ist, der sich außerhalb der ersten Aktivschicht (1021) befindet, und der zweite weitere Aktivmaterialschichtbereich (104) mit der zweiten Aktivschicht (1031) beschichtet ist; und
das Walzen und Reinigen durchgeführt werden, so dass eine Porosität der ersten Aktivschicht (1021) symmetrisch zu dem unbeschichteten Folienbereich (101) größer als eine Porosität der zweiten Aktivschicht (1031) des ersten weiteren Aktivmaterialschichtbereichs (103) und des zweiten weiteren Aktivmaterialschichtbereichs (104) ist.

14. Herstellungsverfahren gemäß Anspruch 13, wobei das Durchführen von Walzen und Reinigen an der Aktivschicht, um den Teil der ersten Oberfläche (11) freizulegen, um den unbeschichteten Folienbereich (101) zu erhalten, und um die Porosität der ersten Aktivschicht (1021) symmetrisch zu dem unbeschichteten Folienbereich (101) größer als die Porosität der zweiten Aktivschicht (1031) des ersten weiteren Aktivmaterialschichtbereichs (103) und des zweiten weiteren Aktivmaterialschichtbereichs (104) zu machen, Folgendes beinhaltet:
Reinigen der Aktivschicht auf der ersten Oberfläche (11), um den Teil der ersten Oberfläche (11) freizulegen, um den unbeschichteten Folienbereich (101) zu erhalten;
Durchführen von Walzen an der Aktivschicht, wobei während eines Walzprozesses eine verdichtete Dichte der ersten Aktivschicht (1021) symmetrisch zu dem unbeschichteten Folienbereich (101) geringer ist als eine verdichtete Dichte der zweiten Aktivschicht (1031) des ersten weiteren Aktivmaterialschichtbereichs (103) und des zweiten weiteren Aktivmaterialschichtbereichs (104), um die Porosität der ersten Aktivschicht (1021) größer als die Porosität der zweiten Aktivschicht (1031) zu machen.

15. Herstellungsverfahren gemäß Anspruch 13, wobei das Durchführen von Walzen und Reinigen an der Aktivschicht, um den Teil der ersten Oberfläche (11) freizulegen, um den unbeschichteten Folienbereich (101) zu erhalten, und die Porosität der ersten Aktivschicht (1021) symmetrisch zu dem unbeschichteten Folienbereich (101) größer als die Porosität der zweiten Aktivschicht (1031) des ersten weiteren Aktivmaterialschichtbereichs (103) und des zweiten weiteren Aktivmaterialschichtbereichs (104) zu machen, Folgendes beinhaltet:
Durchführen von Walzen an der Aktivschicht, wobei nach dem Walzen eine Dicke der Aktivschicht einheitlich ist;
Durchführen von Reinigen an der Aktivschicht auf der ersten Oberfläche (11), um den Teil der ersten Oberfläche (11) freizulegen, um den unbeschichteten Folienbereich (101) zu erhalten;
nach dem Reinigen Durchführen von Porenbildung an der ersten Aktivschicht (1021) symmetrisch zu dem unbeschichteten Folienbereich (101) mittels Laser, um die Porosität der ersten Aktivschicht (1021) größer als die Porosität der zweiten Aktivschicht (1031) zu machen.

## Revendications

1. Une plaque-électrode, comprenant un collecteur de courant (1), une première couche active (1021), une deuxième couche active (1031) et une languette (2), le collecteur de courant (1) comprenant une première surface (11) et une deuxième surface (12) qui sont disposées de manière opposée ;
la première surface (11) est pourvue d'une région de feuille non enduite (101), la deuxième surface (12) est pourvue de la première couche active (1021), et une saillie verticale, sur la première surface (11), de la première couche active (1021) coïncide au moins partiellement avec la région de feuille non enduite (101) ; et
la région de feuille non enduite (101) est pourvue de la languette (2) ;
**caractérisée en ce que** :
la première surface (11) est en outre pourvue d'une première autre région de couche de matériau actif (103) située à l'extérieur de la région de feuille non enduite (101), et la première autre région de couche de matériau actif (103) est enduite de la deuxième couche active (1031) ;
la deuxième surface (12) est en outre pourvue d'une deuxième autre région de couche de matériau actif (104) située à l'extérieur de la première couche active (1021), et la deuxième autre région de couche de matériau actif (104) est enduite de la deuxième couche active (1031) ; et
une porosité de la première couche active est supérieure à une porosité de la deuxième couche active.

2. La plaque-électrode selon la revendication 1, dans laquelle la saillie verticale, sur la première surface (11), de la première couche active (1021) coïncide complètement avec la région de feuille non enduite (101).

3. La plaque-électrode selon la revendication 1 ou la revendication 2, dans laquelle la porosité de la première couche active (1021) est A, la porosité de la deuxième couche active (1031) est B, et B : A = 1 : (1,1-10).

4. La plaque-électrode selon l'une quelconque des revendications 1 à 3, dans laquelle une épaisseur de la première couche active (1021) est supérieure à une épaisseur de la deuxième couche active (1031).

5. La plaque-électrode selon l'une quelconque des revendications 1 à 4, dans laquelle une densité compactée de la première couche active (1021) est inférieure à une densité compactée de la deuxième couche active (1031).

6. La plaque-électrode selon l'une quelconque des revendications 1 à 5, dans laquelle, sur la première surface (11), la première autre région de couche de matériau actif (103) est située sur au moins deux côtés opposés de la région de feuille non enduite (101).

7. La plaque-électrode selon l'une quelconque des revendications 1 à 6, dans laquelle, sur la deuxième surface (12), la deuxième autre région de couche de matériau actif (104) est située sur au moins deux côtés opposés de la première couche active (1021).

8. La plaque-électrode selon la revendication 6 ou la revendication 7, dans laquelle une épaisseur de la plaque-électrode est H, une épaisseur de la première couche active (1021) est H1, et H : H1 = 1 : (0,5-0,95).

9. La plaque-électrode selon l'une quelconque des revendications 1 à 8, dans laquelle la languette (2) s'étend dans une première direction (Y), et comprend une portion de liaison (201) située dans la région de feuille non enduite (101) et une portion d'extension (202) située à l'extérieur du collecteur de courant (1), et la première direction (Y) est une direction de largeur du collecteur de courant (1).

10. La plaque-électrode selon la revendication 9, dans laquelle une taille de la région de feuille non enduite (101) dans la première direction (Y) est L, une taille de la portion de liaison (201) dans la première direction (Y) est L1, et L = (1-2) L1.

11. La plaque-électrode selon la revendication 10, dans laquelle une taille de la première couche active (1021) dans une deuxième direction (X) est W, une taille de la portion de liaison (201) dans la deuxième direction (X) est W1, W = (1-5) W1, et la deuxième direction (X) est perpendiculaire à la première direction (Y), et la deuxième direction (X) est une direction de longueur du collecteur de courant (1).

12. Une batterie, comprenant la plaque-électrode selon l'une quelconque des revendications 1 à 11.

13. Un procédé de préparation d'une plaque-électrode, comprenant :
la préparation d'une suspension de couche active ;
l'enduction de la suspension de couche active sur une première surface (11) et une deuxième surface (12) d'une feuille d'aluminium et le séchage pour former une couche active ;
la réalisation d'un laminage et d'un nettoyage sur la couche active, pour rendre une partie de la première surface (11) exposée afin d'obtenir une région de feuille non enduite (101) ; et
le soudage d'une languette (2) dans la région de feuille non enduite (101) ;
dans lequel la première surface (11) est pourvue de la région de feuille non enduite (101), et la deuxième surface (12) est pourvue d'une première couche active (1021) ;
**caractérisé en ce que** :
la première surface (11) est en outre pourvue d'une première autre région de couche de matériau actif (103) située à l'extérieur de la région de feuille non enduite (101), et la première autre région de couche de matériau actif (103) est enduite d'une deuxième couche active (1031) ; la deuxième surface (12) est en outre pourvue d'une deuxième autre région de couche de matériau actif (104) située à l'extérieur de la première couche active (1021), et la deuxième autre région de couche de matériau actif (104) est enduite de la deuxième couche active (1031) ; et
le laminage et le nettoyage sont réalisés pour rendre une porosité de la première couche active (1021) symétrique à la région de feuille non enduite (101) supérieure à une porosité de la deuxième couche active (1031) de la première autre région de couche de matériau actif (103) et de la deuxième autre région de couche de matériau actif (104).

14. Le procédé de préparation selon la revendication 13, dans lequel la réalisation d'un laminage et d'un nettoyage sur la couche active, pour rendre la partie de la première surface (11) exposée afin d'obtenir la région de feuille non enduite (101), et la porosité de la première couche active (1021) symétrique à la région de feuille non enduite (101) supérieure à la porosité de la deuxième couche active (1031) de la première autre région de couche de matériau actif (103) et de la deuxième autre région de couche de matériau actif (104) comprend :
le nettoyage de la couche active sur la première surface (11) pour exposer la partie de la première surface (11), afin d'obtenir la région de feuille non enduite (101) ;
la réalisation d'un laminage sur la couche active, dans lequel pendant un processus de laminage, une densité compactée de la première couche active (1021) symétrique à la région de feuille non enduite (101) est inférieure à une densité compactée de la deuxième couche active (1031) de la première autre région de couche de matériau actif (103) et de la deuxième autre région de couche de matériau actif (104), pour rendre la porosité de la première couche active (1021) supérieure à la porosité de la deuxième couche active (1031).

15. Le procédé de préparation selon la revendication 13, dans lequel la réalisation d'un laminage et d'un nettoyage sur la couche active, pour rendre la partie de la première surface (11) exposée afin d'obtenir la région de feuille non enduite (101), et la porosité de la première couche active (1021) symétrique à la région de feuille non enduite (101) supérieure à la porosité de la deuxième couche active (1031) de la première autre région de couche de matériau actif (103) et de la deuxième autre région de couche de matériau actif (104) comprend :
la réalisation d'un laminage sur la couche active, dans lequel après le laminage, une épaisseur de la couche active est uniforme ;
la réalisation d'un nettoyage sur la couche active sur la première surface (11) pour exposer la partie de la première surface (11), afin d'obtenir la région de feuille non enduite (101) ;
après le nettoyage, la réalisation d'une formation de pores sur la première couche active (1021) symétrique à la région de feuille non enduite (101) par laser, pour rendre la porosité de la première couche active (1021) supérieure à la porosité de la deuxième couche active (1031).
